**Europäisches Patentamt**

**European Patent Office**

**Office européen des brevets**

(19)

(11) Veröffentlichungsnummer: **0 031 960**
**A1**

# (12) EUROPÄISCHE PATENTANMELDUNG

(21) Anmeldenummer: **80108219.9**

(22) Anmeldetag: **27.12.80**

(51) Int. Cl.³: **C 08 F 6/12**
**C 08 F 8/22, C 08 C 19/14**

(30) Priorität: **05.01.80 DE 3000252**

(43) Veröffentlichungstag der Anmeldung:
**15.07.81 Patentblatt 81/28**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Alfes Franz, Dr.**
**Kruse Bömke 7**
**D-4150 Krefeld(DE)**

(72) Erfinder: **Meyer, Karl-Heinrich, Dr.**
**Deswatinesstrasse 89**
**D-4150 Krefeld(DE)**

(72) Erfinder: **Wulff, Claus, Dr.**
**Kaiserstrasse 248**
**D-4150 Krefeld(DE)**

(72) Erfinder: **Heine, Diez**
**Alkenrather Strasse 15**
**D-5090 Leverkusen(DE)**

(54) **Nachbehandlung chlorierter Polymere.**

(57) Verfahren zur Verminderung des Gehaltes an zur Chlorierung verwendeten Kohlenwasserstofflösungsmitteln in festen chlorierten aliphatischen Polymeren, in dem man einen niederen aliphatischen Alkohol bei einer Temperatur von 90 bis 130°C unter einem Druck von 1,1 bis 20 bar auf das chlorierte Polymere, das 30 bis 70 Gew.-% Wasser enthält, einwirken läßt, das zur Chlorierung verwendete Kohlenwasserstofflösungsmittel durch Azeotropdestillation oder Druckextraktion aus dem chlorierten aliphatischen Polymer abtrennt und das chlorierte aliphatische Polymere aus der Suspension in Alkohol isoliert.

EP 0 031 960 A1

BAYER AKTIENGESELLSCHAFT          5090 Leverkusen-Bayerwerk
Zentralbereich                    G/bc/c
Patente Marken und Lizenzen


## Nachbehandlung chlorierter Polymerer

Aliphatische Polymere wie Naturkautschuk, Polyisopren, Polybutadien, Polyethylen, Polypropylen und Ethylen-propylen-Mischpolymerisate kann man chlorieren, indem man gasförmiges Chlor in eine Lösung des Polymeren in einem chlorbeständigen organischen Lösungsmittel, z.B. bei 60 bis 120°C, einleitet. Das übliche chlorbeständige Lösungsmittel ist Tetrachlorkohlenstoff, der sich zwar besonders gut eignet, aber wegen seiner Toxizität besondere Vorsichtsmaßnahmen erfordert. Aus der Lösung des Polymeren im chlorbeständigen organischen Lösungsmittel kann man nach Abschluß der Chlorierung das Polymer in fester Form zurückgewinnen, indem man das Gemisch mit heißem Wasser oder Dampf behandelt. Ein Teil des verwendeten organischen Lösungsmittels destilliert dabei ab, das chlorierte Polymere fällt aus und kann abfiltriert werden. Das primär erhaltene Produkt enthält dann etwa 30 bis etwa 60 Gew.-% Wasser, neben erheblichen Restmengen des organischen Lösungsmittels. Auch durch Trocknen dieses Produktes im Vakuum oder im Gasstrom wird das organische Lösungsmittel nicht vollständig entfernt, es bleiben beispielsweise 5 bis 10 Gew.-Teile organisches Lösungsmittel auf 100 Gew.-Teile des chlorierten Polymeren.

Zur Verwendung als Anstrichfarbe löst man die chlorierten Polymeren in einem gebräuchlichen Lacklösungsmittel, beispielsweise Toluol; dann gelangen auch die noch vorhandenen Restmengen des zur Chlorierung verwendeten Lösungsmittels in die Lösung und verdunsten beim Anstrich. Um dies zu vermeiden, muß man den Restgehalt an zur Chlorierung benutztem Lösungsmittel in den für Anstrichzwecke verwendeten chlorierten Polymeren reduzieren.

Es ist bekannt (vgl. BE-PS 637 516), trockenen, chlorierten Polymeren einen aliphatischen Alkohol mit niedrigem Siedepunkt, insbesondere Methanol, zuzusetzen und das Gemisch bei Normaldruck zu destillieren. Dabei wird im Polymeren noch enthaltenes Lösungsmittel als Azeotrop mit dem Alkohol entfernt. Dieses Verfahren versagt aber, wenn man ein wasserfeuchtes chloriertes Polymeres mit einer üblichen Restfeuchte von etwa 50 % einsetzt, wie es bei der Chlorierung meist primär anfällt.

Gegenstand der Erfindung ist ein Verfahren zur Verminderung des Gehaltes an zur Chlorierung benutztem Kohlenwasserstofflösungsmittel in festen chlorierten, aliphatischen, wasserhaltigen Polymeren, das dadurch gekennzeichnet ist, daß man einen niederen aliphatischen Alkohol bei einer Temperatur von 90

Le A 20 090

bis 130°C unter einem Druck von 1,1 bis 20 bar auf das chlorierte Polymerisat, das 30 bis 70 Gew.-% Wasser enthält, einwirken läßt, das zur Chlorierung benutzte Kohlenwasserstofflösungsmittel und den niedrigen aliphatischen Alkohol durch Azeotropdestillation oder Extraktion unter dem vorgenannten Druck von dem chlorierten aliphatischen Polymeren abtrennt und das chlorierte aliphatische Polymer aus der Dispersion in dem niederen aliphatischen Alkohol isoliert. Auch bei großen Wassergehalten von etwa 50 Gew.-% wird der Gehalt an Lösungsmittel in dem chlorierten Polymeren im allgemeinen auf unter 1 Gew.-% gesenkt. Dies gilt insbesondere für Tetrachlorkohlenstoff, das allgemein bevorzugte Lösungsmittel. Alkohole sind bevorzugt aliphatische $C_1$-$C_4$-Alkohole, insbesondere Methanol. Bevorzugte Temperaturen für die Einwirkung der Alkohole sind 95 bis 115°C.

Der Alkohol kann dem wasserfeuchten, lösungsmittelhaltigen Polymer flüssig oder dampfförmig oder teilweise flüssig und teilweise dampfförmig zugesetzt werden. Bevorzugt wird das Lösungsmittel enthaltende wasserfeuchte chlorierte Polymere im Alkohol aufgeschlämmt, wobei die Wärme, die zum Aufheizen der Mischung benötigt wird, durch überhitzten Dampf des Alkohols geliefert wird, der in die Suspension eingeleitet wird. Die Reaktionstemperatur ist zweckmäßig oberhalb der Siedetemperatur des Alkohols unter Normaldruck. Der obere Grenzwert der Behandlungstemperatur wird in der Praxis durch die Notwendigkeit bestimmt, einen Abbau des zu behandelnden chlorierten Polymeren zu vermeiden. Im allgemeinen wird daher

Le A 20 090

eine Behandlungstemperatur unter 130°C, vorzugsweise bis 115°C, angewendet.

Es ist auch möglich, das erfindungsgemäße Verfahren als Druckextraktion auszuführen, indem man den Alkohol auf das wasserfeuchte Polymere bei Temperaturen oberhalb des Siedepunktes des Alkohols und einem Druck von 1,1 bis 20 bar einwirken läßt, wobei ein partieller Druck durch ein Fremdgas, z.B. Stickstoff, erzeugt werden kann. Nach Entspannung, Abkühlung und Filtration befindet sich dann das extrahierte Lösungsmittel in der Alkoholphase, aus der es durch Destillation zurückgewonnen werden kann.

Eine weitere Ausführungsform des Verfahrens sieht vor, daß ein Teil des Alkohols, der mit dem Lösungsmittel ein Azeotrop bildet, unter Druck abdestilliert wird. Dabei kann im Destillat durch Verdünnen mit Wasser das organische Lösungsmittel manchmal als schwerere Schicht abgetrennt werden.

Die nach der azeotropen Druckdestillation oder Druckextraktion anfallende Dispersion des chlorierten Polymeren in Alkohol kann durch Destillation oder durch Wasserdampfdestillation oder durch Zusatz von heißem Wasser vom Alkohol befreit werden. Das gereinigte Polymere enthält in jedem Fall weniger als 1 % Restlösungsmittel.

Beispiele für Polymere, die als Ausgangsmaterialien verwendet werden können, sind nach üblichen Verfahren in chlorbeständigen Lösungsmitteln hergestellte

Le A 20 090

Chlorierungsprodukte von Naturkautschuk, Polyisopren, Polybutadien, Polyethylen, Polypropylen, Ethylenpropylen-Mischpolymerisaten und Gemischen daraus. Sie enthalten im allgemeinen 30 bis 70 Gew.-% Chlor. Andere als Ausgangsmaterialien geeignete Polymerisate sind beispielsweise Polyhalogenkohlenwasserstoffe wie Polychloropren und Polyvinylchlorid, sowie teilchlorierte aliphatische Polymerisate.

- 6 -

Beispiel 1

100 Gew.-Teile lösliches cis-1,4-Polyisopren werden in 670 Gew.-Teilen Tetrachlorkohlenstoff aufgelöst. In die Lösung wird bei 65 bis 80°C Chlorgas eingeleitet, bis der Chlorgehalt in einer Probe des chlorierten Polymeren 66 % beträgt. Anschließend werden Chlor und Chlorwasserstoff durch Spülen mit Stickstoff entfernt. Die chlorierten Polymeren werden dann durch Eintragen der Lösung in heißes Wasser (95°C) ausgefällt und mittels einer Nutsche isoliert. Eine Probe des getrockneten chlorierten Polymeren enthielt 8,5 % Tetrachlorkohlenstoff.

300 Gew.-Teile nutschenfeuchtes Polymeres, das 50 % Wasser enthält, werden in einem Rührautoklaven mit 900 Gew.-Teilen Methanol angeschlämmt. Die Maische wird im geschlossenen Autoklaven auf 104°C aufgeheizt, wobei sich ein Druck von 2,8 bar einstellt. Anschließend werden unter Rühren 300 Gew.-Teile tetrachlorkohlenstoffhaltiges wasserfeuchtes Methanol abdestilliert, wobei im Autoklaven ein Druck von 1,9 bis 2,8 bar aufrechterhalten wird. Nach Entspannen wird die Suspension des Polymeren in Methanol in 900 Gew.-Teile 95°C heißes Wasser eingetragen. Aus der Mischung wird durch Einblasen von Wasserdampf Methanol abdestilliert, bis der Rest-Methanolgehalt in der Maische 2 bis 3 % beträgt. Anschließend wird das chlorierte Polymere auf einer Nutsche isoliert und durch 24 Stunden dauerndes Erhitzen in einem Vakuumtrockenschrank bei einer Temperatur von 80°C und einem Druck von 20 Torr

Le A 20 090

getrocknet. Der Tetrachlorkohlenstoffgehalt des getrockneten chlorierten Polymeren betrug 0,25 %.

In der folgenden Tabelle sind die Daten weiterer Polymerer, die auf die gleiche Weise hergestellt wurden, aufgeführt:

| Polymeres | nach Chlorierung, Wasser-fällung und Trocknung | | Alkohol für Extraktion | $CCl_4$-Gehalt nach Behandlung gemäß Beispiel 1 |
|---|---|---|---|---|
| | % Cl | % $CCl_4$ | | % $CCl_4$ |
| Mischung aus cis-1,4-Polyisopren und 30 % Polybutadien | 65 | 8,2 | Methanol | 0,25 |
| Naturkautschuk mit 0,9 % N | 66 | 9,2 | " | 0,50 |
| isotaktisches Poly-ethylen | 64 | 6,8 | " | 0,44 |
| isotaktisches Poly-propylen | 65 | 6,1 | " | 0,34 |
| Polychloropren | 65,5 | 7,2 | " | 0,2 |
| Mischung aus 30 Gew.-Tln. Polybutadien und 70 Gew.-Tln. cis-1,4-Polyisopren | 66 | 8,4 | Ethanol | 0,68 |
| " | 66 | 8,4 | Isopropanol | 0,66 |

Le A 20 090

- 8 -

0031960

- 9 -

Beispiel 2

100 Gew.-Teile lösliches cis-1,4-Polyisopren werden in 670 Gew.-Teilen Tetrachlorkohlenstoff aufgelöst. In die Lösung wird bei 65°C Chlorgas eingeleitet, bis der Chlorgehalt in einer Probe des chlorierten Polymeren 67 % beträgt. Anschließend werden Chlor und Chlorwasserstoff durch Ausblasen mit Stickstoff entfernt. Das chlorierte Polymere wird durch Eintragen der Lösung in heißes Wasser (95°C) ausgefällt und auf einer Nutsche isoliert. Eine Probe des getrockneten chlorierten Polymeren enthielt 9,2 % Tetrachlorkohlenstoff.

300 Gew.-Teile nutschenfeuchtes Polymeres, das 55 % Wasser enthält, werden in einem Rührautoklaven mit 1080 Gew.-Teilen Methanol angeschlämmt. Die Maische wird im geschlossenen Autoklaven auf 105°C aufgeheizt, wobei sich ein Druck von 3,2 bar einstellt. Unter Rühren werden diese Bedingungen 30 Minuten eingehalten, dann wird entspannt, und die Suspension des Polymeren in 720 Gew.-Teile heißes Wasser eingefahren. Aus der Mischung wird unter Rühren bei Normaldruck über eine Füllkörperkolonne zunächst ein wasserhaltiges Gemisch aus Methanol und Tetrachlorkohlenstoff bei einer Kopftemperatur von 52°C abdestilliert, anschließend bei 64 bis 65°C Methanol, bis der Rest-Methanolgehalt in der Maische 8 % beträgt. Das chlorierte Polymere wird auf einer Nutsche isoliert und 24 Stunden bei 80°C und 20 Torr im Vakuumtrockenschrank getrocknet. Der Tetrachlorkohlenstoffgehalt des getrockneten chlorierten Polymeren betrug 0,6 %.

In der folgenden Tabelle sind die Daten weiterer Polymerer, die nach dem gleichen Verfahren hergestellt wurden, aufgeführt:

Le A 20 090

| Polymeres | nach Chlorierung, Wasser-fällung und Trocknung | | Alkohol für Extraktion | $CCl_4$-Gehalt nach Behandlung gemäß Beispiel 2 |
|---|---|---|---|---|
| | % Cl | % $CCl_4$ | | % $CCl_4$ |
| cis-1,4-Polyisopren | 65 | 8,2 | Methanol | 0,25 |
| Naturkautschuk mit 0,9 % N | 66 | 9,2 | " | 0,60 |
| isotaktisches Poly-ethylen | 64 | 6,8 | " | 0,56 |
| isotaktisches Poly-propylen | 65 | 6,1 | " | 0,48 |
| Polychloropren | 65,5 | 7,2 | " | 0,40 |
| Mischung aus 30 Gew.-Tln. Polybutadien und 70 Gew.-Tln. cis-1,4-Polyisopren | 66 | 8,4 | Ethanol | 0,68 |
| " | 66 | 8,4 | Isopropanol | 0,68 |

Beispiel 3

Entsprechend der in Beispiel 2 angegebenen Vorschrift wird ein wasserfeuchtes chloriertes cis-1,4-Polyisopren hergestellt.

300 Gew.-Teile nutschenfeuchtes Polymeres, das 55 % Wasser enthält, werden in einem Rührautoklaven, der mit einem Tauchrohr und einer Füllkörperkolonne ausgerüstet ist, in 540 Gew.-Teilen Methanol aufgeschlämmt. Die Maische wird in 5 Minuten durch Einblasen von 270 Gew.-Teilen 120°C heißem Methanoldampf in das druckfest geschlossene System auf 105°C aufgeheizt. Anschließend werden bei 105°C unter einem Druck, der durch Stickstoff bei 2 bis 3 bar gehalten wird, und Rühren in 30 Minuten 270 Gew.-Teile tetrachlorkohlenstoffhaltiges wasserfeuchtes Methanol abdestilliert. Nach Entspannen wird die Suspension des Polymeren in Methanol in 720 Gew.-Teile heißes Wasser eingetragen und entsprechend der Vorschrift in Beispiel 2 aufge-arbeitet. Der Tetrachlorkohlenstoffgehalt des getrock-neten chlorierten Kautschuks betrug 0,3 %.

Le A 20 090

Patentansprüche

1) Verfahren zur Verminderung des Gehaltes an zur Chlorierung verwendeten Kohlenwasserstofflösungsmitteln in festen chlorierten aliphatischen Polymeren, dadurch gekennzeichnet, daß man einen niederen aliphatischen Alkohol bei einer Temperatur von 90 bis 130°C unter einem Druck von 1,1 bis 20 bar auf das chlorierte Polymere, das 30 bis 70 Gew.-% Wasser enthält, einwirken läßt, das zur Chlorierung verwendete Kohlenwasserstofflösungsmittel durch Azeotropdestillation oder Druckextraktion aus dem chlorierten aliphatischen Polymer abtrennt und das chlorierte aliphatische Polymere aus der Suspension in Alkohol isoliert.

2) Verfahren nach Anspruch 1, dadurch gekennzeichnet, daß das zur Chlorierung verwendete Lösungsmittel Tetrachlorkohlenstoff ist.

Le A 20 090

Europäisches Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe. soweit erforderlich. der maßgeblichen Teile | betrifft Anspruch | |
| - | <u>BE - A - 637 516</u> (ICI) <br> * Patentansprüche 1,3 * <br><br> -- <br><br> <u>CH - A - 470 427</u> (LONZA) <br> * Anspruch; Unteranspruch 1; Spalte 2, Zeilen 28-32 * <br><br> -- <br><br> <u>DE - A - 2 701 288</u> (PADGET) <br> * Patentansprüche 1,4,6,10 * <br><br> ------- | 1,2 <br><br><br><br> 1,2 <br><br><br><br><br> 1,2 | C 08 F   6/12 <br> 8/22 <br> C 08 C 19/14 |

RECHERCHIERTE SACHGEBIETE (Int. Cl.³)

C 08 F   8/20
8/22
6/10
6/12
6/24
C 08 C 19/14

KATEGORIE DER GENANNTEN DOKUMENTE

X. von besonderer Bedeutung

A technologischer Hintergrund

O nichtschriftliche Offenbarung

P Zwischenliteratur

T der Erfindung zugrunde liegende Theorien oder Grundsätze

E kollidierende Anmeldung

D. in der Anmeldung angeführtes Dokument

L. aus andern Gründen angeführtes Dokument

&. Mitglied der gleichen Patentfamilie. übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 25.03.1981 | PEETERS |

EPA form 1503.1   06.78